# EUROPEAN PATENT APPLICATION

(11) **EP 2 778 634 A2**
(43) Date of publication of application: **17.09.2014**
(21) Application number: 13197802.5
(22) Date of filing: 17.12.2013
(51) Int. Cl.: G01H 3/00

(54) **Radar-based vibration sensor self-calibration method**

(30) Priority: 14.03.2013 US 201313827464
(71) Applicant: Honeywell International Inc., Morristown, NJ 07962-2245 (US)
(72) Inventor: Peczalski, Andy, Morristown, NJ New Jersey 07962-2245 (US); Bharadwaj, Raj Mohan, Morristown, NJ New Jersey 07962-2245 (US); Pham, Hai, Morristown, NJ New Jersey 07962-2245 (US); Wunderlin, David, Morristown, NJ New Jersey 07962-2245 (US); Kim, Kyusung, Morristown, NJ New Jersey 07962-2245 (US); Mylaraswamy, Dinkar, Morristown, NJ New Jersey 07962-2245 (US)
(74) Representative: Houghton, Mark Phillip

(57) **Abstract**

A method of calibrating a radar-based vibration sensor that includes a radar head coupled to a vibration device includes disposing the vibration sensor at a fixed distance from a target, and transmitting radio frequency (RF) signals toward, and receiving RF signals reflected by, the target. An excitation voltage is supplied, at a plurality of different excitation frequencies, to the vibration device to cause the vibration sensor to vibrate. Vibration sensor acceleration is determined at each of the different excitation frequencies. A calibration curve is generated based on the determined vibration sensor acceleration at each of the different excitation frequencies, and on the reflected RF signals at each of the different excitation frequencies.

## Description

### STATEMENT REGARDING FEDERALLY SPONSORED RESEARCH OR DEVELOPMENT

This invention was made with Government support under W911W6-11-C-0030 awarded by the US Air Force. The Government has certain rights in the invention.

### TECHNICAL FIELD

The present invention generally relates to radar-based vibration sensor, and more particularly relates to a method of self-calibrating a radar-based vibration sensor.

### BACKGROUND

Recently, radar-based vibration sensors have been proposed to implement standoff (e.g., non-contact) vibration sensing for preventive maintenance assessment. A typical radar-based sensor transmits radio frequency (RF) waves toward, and receives RF signals reflected by, the vibrating component being monitored. By measuring the relative phase change along the round trip of the reflected RF wave, such radar-based sensors have been shown to exhibit a wide-field of view and to reliably measure displacements in the nanometer range. These non-contact, radar-based sensors have the potential to eliminate several accelerometers, and hence reduce the weight of presently known monitoring systems. These non-contact, radar-based sensors are also relatively easier to install and relatively less expensive than presently known monitoring system.

Radar-based vibration sensors are, however, relatively sensitive; in particular, to the distance between the sensor head and the vibrating component with accuracy of e.g. 0.1mm, the beam angle, and background noise induced by vibrations in sensor attachment hardware. This can make the calibration of such sensors relatively difficult. Hence, there is a need for a method of calibrating a radar-based vibration sensor, and more particularly a method for self-calibrating a radar-based vibration sensor. The present invention addresses at least this need.

### BRIEF SUMMARY

In one embodiment, a method of calibrating a radar-based vibration sensor that includes a radar head coupled to a vibration device includes disposing the vibration sensor at a fixed distance from a target, and transmitting radio frequency (RF) signals toward, and receiving RF signals reflected by, the target. An excitation voltage is supplied, at a plurality of different excitation frequencies, to the vibration device to cause the vibration sensor to vibrate. Vibration sensor acceleration is determined at each of the different excitation frequencies. A calibration curve is generated based on the determined vibration sensor acceleration at each of the different excitation frequencies, and on the reflected RF signals at each of the different excitation frequencies.

In another embodiment, a method of calibrating a radar-based vibration sensor that includes a radar head coupled to a vibration device includes determining one or more resonant frequencies of the vibration sensor. One or more background noise frequencies are sensed using the vibration sensor, and a plurality of exclusion frequencies is determined. The vibration sensor is disposed at a fixed distance from a target, and radio frequency (RF) signals are transmitted toward the target, and RF signals reflected by the target are received. An excitation voltage is supplied, at a plurality of different excitation frequencies that do not include the exclusion frequencies, to the vibration device to cause the vibration sensor to vibrate. At each of the different excitation frequencies, a parameter is measured that is at least representative of vibration sensor acceleration, and vibration sensor acceleration is calculated using the parameter. A calibration curve is generated based on the calculated vibration sensor acceleration at each of the different excitation frequencies and on the reflected RF signals at each of the different excitation frequencies.

In yet another embodiment, a method of calibrating a radar-based vibration sensor that includes a radar head coupled to a vibration device includes determining one or more resonant frequencies of the vibration sensor, and sensing, using the vibration sensor, one or more background noise frequencies. A plurality of exclusion frequencies is determined. The vibration sensor is disposed at a fixed distance from a target, and radio frequency (RF) signals are transmitted toward the target, and RF signals reflected by the target are received. An excitation voltage is supplied, at a plurality of different excitation frequencies that do not include the exclusion frequencies, to the vibration device to cause the vibration sensor to vibrate. At each of the different excitation frequencies, a parameter is measured that is at least representative of vibration sensor acceleration, and vibration sensor acceleration is calculated using the parameter. A calibration curve is generated based on the calculated vibration sensor acceleration at each of the different excitation frequencies and on the reflected RF signals at each of the different excitation frequencies. The vibration sensor is disposed at a plurality of different fixed distances from the target, and a calibration curve is generated at each of the different fixed distances.

Furthermore, other desirable features and characteristics of the [system/method] will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a functional block diagram representation of one embodiment of a radar-based vibration sensor;
FIG. 2 depicts a self-calibration procedure, in flowchart form, that may be implemented by the sensor of FIG. 1;
FIG. 3 depicts a simplified representation of a set-up of the vibration sensor of FIG. 1 when implementing the process of FIG. 2, and an example response of the vibration sensor to background vibrations;
FIG. 4 ; depicts a simplified representation of a calibration curve that may be generated using the process depicted in FIG. 2; and
FIG. 5 depicts a process, in flowchart form, for calculating vibrations sensor acceleration.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

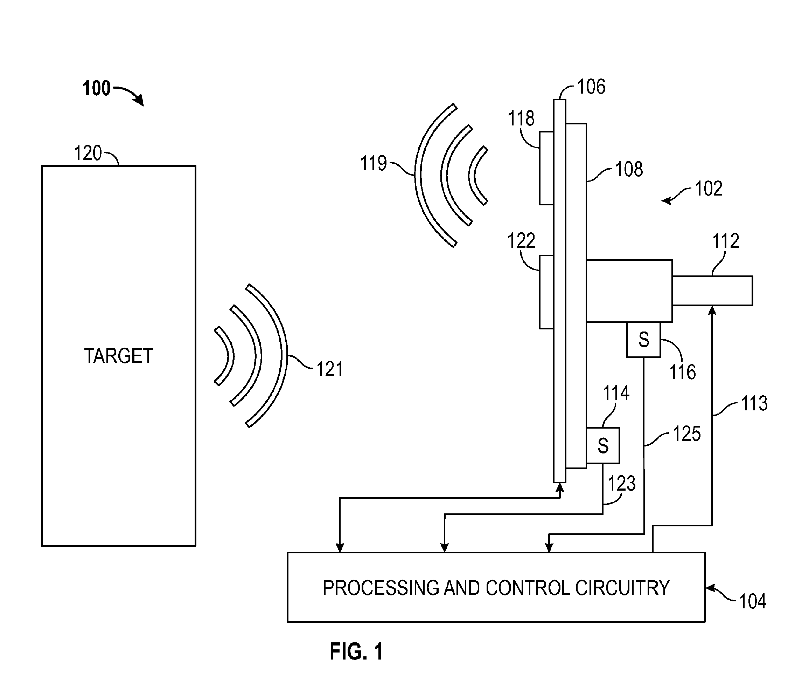

Referring to FIG. 1, a functional block diagram representation of one embodiment of a radar-based vibration sensor 100 is depicted, and includes a sensor 102 and processing and control circuitry 104. The sensor 102 includes a radar head 106, a vibration device 108, an exciter 112, an accelerometer 114, and a displacement sensor 116. The radar head 106 may be variously configured and implemented, but includes at least a transmit antenna 118 and a receive antenna 122. The transmit antenna 118 is configured to receive and transmit radio frequency (RF) signals 119 toward a target 120, such as a vibrating component. The target 120 reflects the RF signals, and the reflected RF signals 121 are received by receive antenna 122. It is noted that the RF signals that the transmit antenna 118 transmits are supplied thereto by the processing and control circuitry 104, which additionally processes the reflected RF signals 121 that are received by receive antenna 122. As will be described further below, the processing and control circuitry 104 additionally implements a self-calibration procedure of the sensor 102.

The radar head 106 is coupled to the vibration device 108, which is in turn coupled to the exciter 112. The exciter 112 is coupled to receive an excitation signal 113 from the processing and control circuitry 104 and is configured, upon receipt thereof, to vibrate the vibration device 108, and thus the radar head 106, at a desired frequency. Preferably, the sensor 102 is disposed such that the vibrations are substantially orthogonal to the antennas 118 and 122 so that the vibrations of the target 120 accurately emulate those that antennas 118, 122 will be sensing during normal operation. The acceleration of the vibration device 108 is sensed by the accelerometer 114, which supplies acceleration signals 123 representative of the sensed acceleration to the processing and control circuitry 104. The displacement of the vibration device 108 is sensed by the displacement sensor 116, which supplies displacement signals 125 representative of the sensed displacement to the processing and control circuitry 104. It will be appreciated that the accelerometer 114 and the displacement sensor 116 may be implemented using any one of numerous suitable types of acceleration and displacement sensors, respectively. It will additionally be appreciated vibration table 108 may be implemented using any one of numerous suitable types of vibration devices including, for example, a vibration table, and an off-axis wheel, just to name a few.

The processing and control circuitry 104, as noted above, is configured to supply the RF signals to the transmit antenna 118, and process the reflected RF signals received by the receive antenna 122. Although the processing and control circuitry 104 is, for ease of description and illustration, depicted as being separate from the sensor 102, it will be appreciated that is could be (and preferably is) collocated with the sensor 102. The processing and control circuitry 104 implements these functions as part of the normal sensing operations of the radar-based vibration sensor 100. As was also noted above, the processing and control circuitry 104 is further configured to implement a self-calibration procedure. To do so, the processing and control circuitry 104 is further configured, during the self-calibration procedure, to controllably supply the excitation signal to the exciter 112, and to receive and process the acceleration and displacement signals 123, 125. In many situations the displacement sensor 116 is better suited for low frequency sensing and the accelerometer 114 is better suited for high frequency sensing, although in some instances only one of these sensors 114, 116 could be used. The reasons for this additional signal processing and control functionality will become apparent from a description of the self-calibration procedure, which will now be provided.

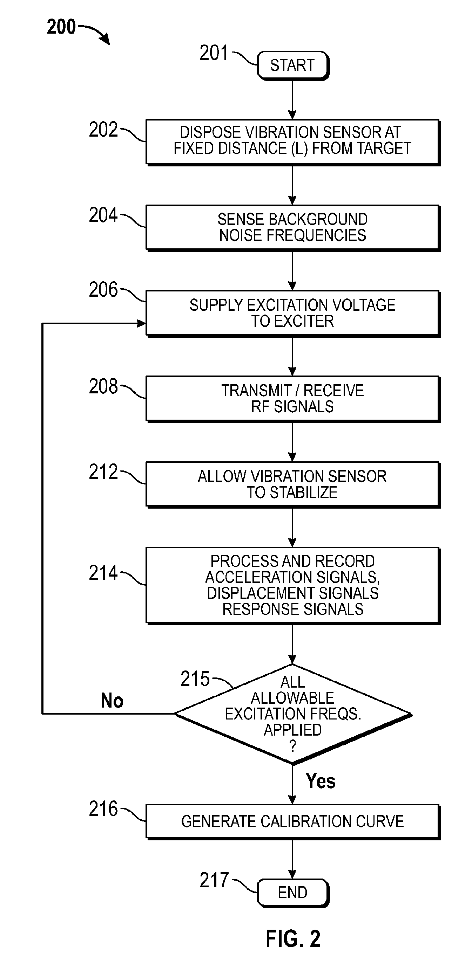

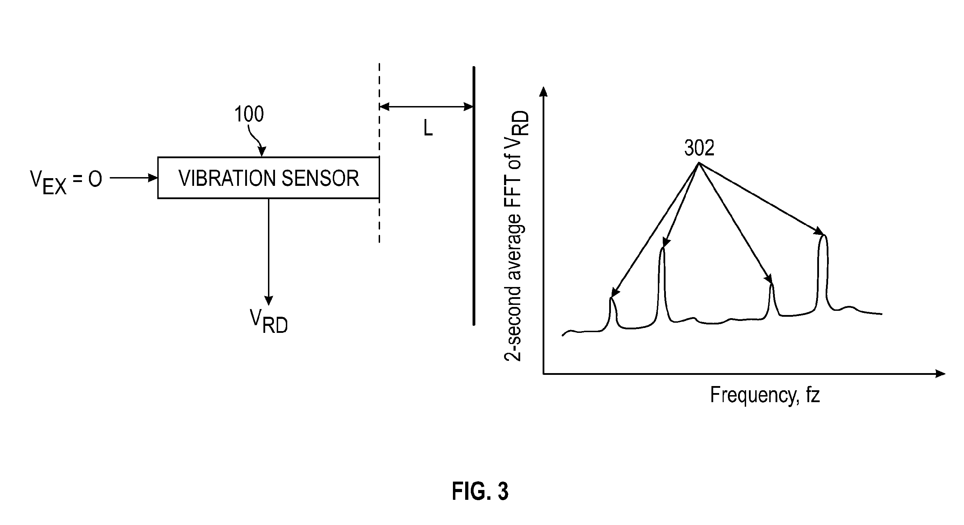

The self-calibration procedure 200, which is depicted in flowchart form in FIG. 2, is implemented by disposing the vibration sensor 100 at a fixed distance from the target 120 (202) and sensing one or more background noise frequencies (204). More specifically, as depicted in FIG. 3, when the vibration sensor 100 is disposed the fixed distance (L) from the target 120, the response of the vibration sensor 100 to background vibrations alone is analyzed. The background vibration may be caused, for example, by the vibration of the building, air and so on. The frequency peaks 302 associated with the background vibrations comprise one portion of a set of exclusion frequencies. The other portion of the set of exclusion frequencies comprises one or more resonant frequencies of the vibration sensor 100, which may be predetermined, for example, by exciting the vibration device 108 with a constant voltage (i.e. force) and excluding the frequency range where the output voltage of the sensor 100 shows peaks. The set of exclusion frequencies are frequencies at which the processing and control circuitry 104 will not excite the vibration device 108. Those frequencies that are not in the set of exclusion frequencies are referred to herein as allowable self-calibration frequencies.

With the allowable self-calibration frequencies known, the signal processing and control circuitry 104 supplies an excitation voltage, at one of the allowable excitation frequencies, to the exciter 112 to thereby cause the vibration device 108 and sensor 102 to vibrate (206). The signal processing and control circuitry 104 also controls the sensor 102 to transmit RF signals toward, and receive RF signals reflected by, the target 120 (208).

Preferably, the vibration sensor 100 is allowed to stabilize (212). The stabilization may be based, for example, on a visual check of the output voltage variation. In any case, after stabilization, the acceleration signals 123, the displacement signals 125, and the response signals supplied by the receive antenna 122 are each processed and recorded (214). Then, a portion of the previous steps (206-214) are repeated at another one of the allowable excitation frequencies. These steps (216-214) are repeated for all, or at least a selected portion, of the set of allowable self-calibration frequencies. A calibration curve is then generated (216).

Before proceeding further, it should be noted that the calibration curve that is generated via the self-calibration process 200 is applicable to the particular fixed distance (L) that the vibration sensor 100 was disposed relative to the target 120. If the vibration sensor 100 is moved such that it is disposed a fixed distance that is different (e.g., more than about 0.1mm), then the self-calibration process 200 should be run again at this new fixed distance.

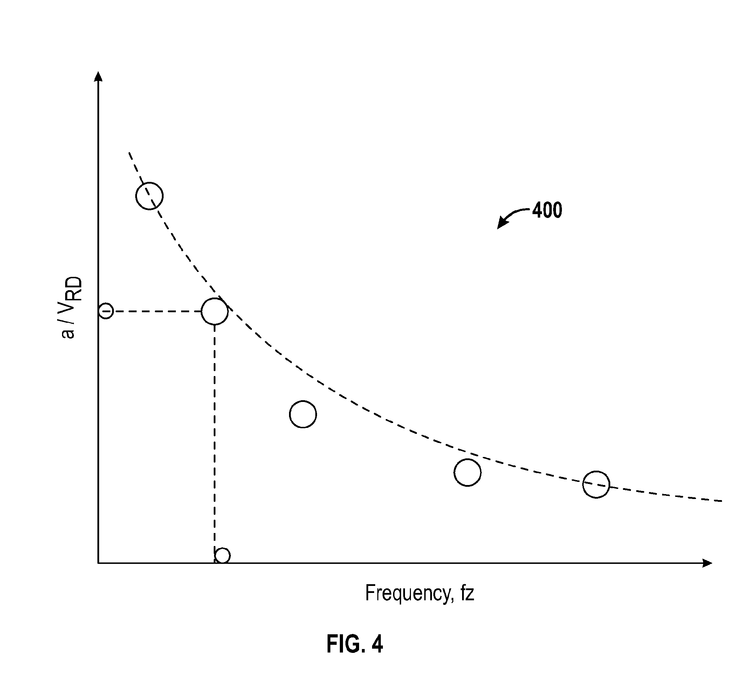

Returning once again to the self-calibration process 200, the calibration curve that is generated is a curve of a specified sensor ratio versus frequency. In the depicted embodiment, the sensor ratio is the ratio of vibration sensor acceleration-to-vibration sensor response (a/V_{RD}),. To more clearly illustrate this, reference should be made to FIG. 4, which depicts a simplified representation of a calibration curve 400. In the depicted calibration curve 400 the x-coordinate is the excitation frequency (f_{z}), and the y-coordinate is the sensor ratio (a/V_{RD}) at each of the different excitation frequencies. As may be appreciated, the vibration sensor response (V_{RD}) is the response of the sensor 102 to the RF signals reflected from the target 120. At least in the depicted embodiment, and as will now be explained, the sensor acceleration (a) is a value that is calculated from a parameter that is at least representative of vibration sensor acceleration.

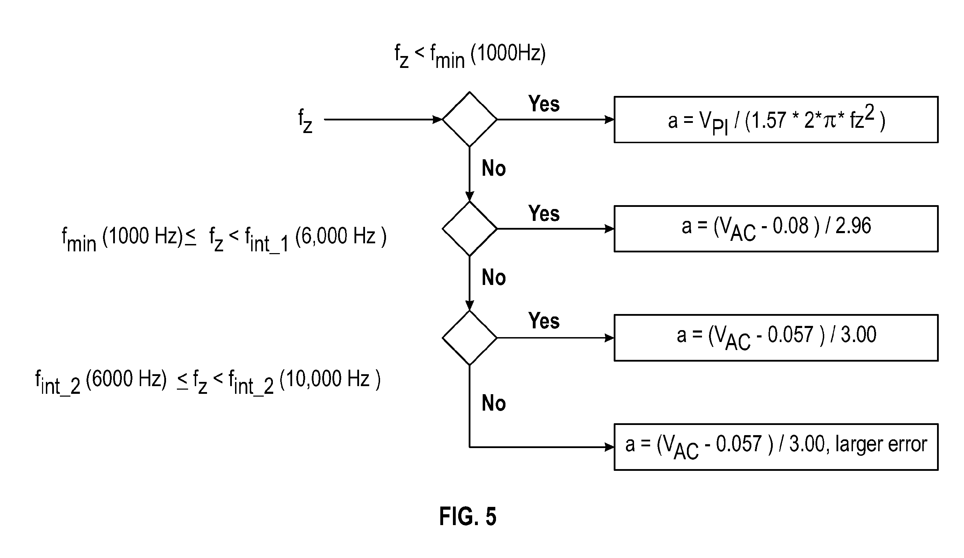

Referring to FIG. 5, it may be seen that the parameter that is used to calculate the vibration sensor acceleration (a) is one of either vibration device displacement or vibration device acceleration. The displacement (d) is related to acceleration (a) by a simple formula a=d*(2*Pi*f)^2 at a given frequency (f). The displacement sensor 116 is more sensitive at low frequencies, and the accelerometers 114 are more sensitive at high frequencies of operation. In particular, if the excitation frequency (f_{z}) is less than a predetermined frequency (fₘᵢₙ), then the parameter is vibration device displacement, as represented by the displacement signals 125 (V_{PI}) from the displacement sensor 116. If, however, the excitation frequency (f_{z}) is greater than or equal to the predetermined frequency (fₘᵢₙ), the parameter is vibration device acceleration, as represented by the acceleration signals (V_{AC}) from the accelerometer 114. In the depicted embodiment, different formulae are used to calculate vibration sensor acceleration (a) when the excitation frequency (f_{z}) is greater than a first predetermined intermediate frequency (f_{int_1}) or a second predetermined intermediate frequency (f_{int_2}). It will be appreciated that the particular formulae and the particular frequencies (fₘᵢₙ, f_{int_1}, f_{int_2}) depicted in FIG. 5 are merely exemplary of those used for one particular embodiment, and the formulae and frequencies may vary as needed or desired.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of calibrating a radar-based vibration sensor that includes a radar head coupled to a vibration device, the method comprising the steps of:
disposing the vibration sensor at a fixed distance from a target;
transmitting radio frequency (RF) signals toward, and receiving RF signals reflected by, the target;
supplying an excitation voltage, at a plurality of different excitation frequencies, to the vibration device to cause the vibration sensor to vibrate;
determining vibration sensor acceleration at each of the different excitation frequencies;
generating a calibration curve based on (i) the determined vibration sensor acceleration at each of the different excitation frequencies and (ii) the reflected RF signals at each of the different excitation frequencies.

2. The method of claim 1, further comprising:
determining one or more resonant frequencies of the vibration sensor;
sensing, using the vibration sensor, one or more background noise frequencies; and
determining a plurality of exclusion frequencies, the exclusion frequencies comprising the one or more resonant frequencies and the one or more background noise frequencies.

3. The method of claim 2, wherein:
the target is disposed within an ambient environment; and
the background noise frequencies are associated with the ambient environment.

4. The method of claim 2, wherein the step of sensing one or more background frequencies is conducted when no excitation voltage is being supplied to the vibration device.

5. The method of claim 1, wherein the step of determining vibration sensor acceleration comprises:
measuring, at each of the different excitation frequencies, a parameter that is at least representative of vibration sensor acceleration; and
calculating vibration sensor acceleration using the parameter.

6. The method of claim 5, wherein the parameter is one of vibration device displacement or vibration device acceleration.

7. The method of claim 6, wherein the parameter is vibration device displacement when the excitation frequency is less than a predetermined frequency.

8. The method of claim 7, wherein the parameter is vibration device acceleration when the excitation frequency is greater than or equal to the predetermined frequency.

9. The method of claim 1, wherein the step of generating the calibration curve comprises:
generating a plurality of y-coordinates, each y-coordinate associated with each of the different excitation frequencies and calculated from the determined vibration sensor acceleration and the reflected RF signal at each different excitation frequency;
for each of the different excitation frequencies, plotting its associated y-coordinate; and
curve-fitting the plotted y-coordinates.

10. The method of claim 1, further comprising:
disposing the vibration sensor at a plurality of different fixed distances from the target; and
generating a calibration curve at each of the different fixed distances.
